# EUROPEAN PATENT APPLICATION

(11) **EP 4 101 877 A1**
(43) Date of publication of application: **14.12.2022**
(21) Application number: 22187014.0
(22) Date of filing: 03.04.2018
(51) Int. Cl.: C08H 8/00, C08L 97/02, C08J 5/04, C04B 28/32, C04B 18/24, C04B 18/02, C04B 111/00, C08L 3/02, C08L 31/04, C08L 67/04, C04B 26/02

(54) **METHOD FOR PROCESSING A MIX OF MISCANTHUS FIBERS FOR THE PRODUCTION OF A BIO PLASTIC COMPOSITE**

(30) Priority: 31.03.2017 NL 2018623
(62) Divisional of application: 18719681.1
(71) Applicant: Nnrgy B.V., 3221 CB Hellevoetsluis (NL)
(72) Inventor: VAN GILST, Jan-Govert, 3221 CB Hellevoetsluis (NL)
(74) Representative: Renkema, Jaap

(57) **Abstract**

The invention relates to a method for processing a mix of lignocellulose fibers, such as miscanthus or sorghum fibers, for the production of a bio-based composite, comprising the steps of:
- harvesting lignocellulosic crops and processing the harvested lignocellulosic crops to obtain a raw mix of lignocellulose fibers,
- separating the raw mix of lignocellulose fibers, such as by sieving or grinding, into a first fraction (f1) comprising a mix of fibers having a fiber size of approximately < s1 and having first physical/chemical properties and a second fraction (f2) comprising a mix of fibers having a fiber size of approximately > s1 and having second physical/chemical properties being different from the first physical/chemical properties,
- mixing the fibers of the first fraction (f1) or the fibers of the second fraction (f2) with a binding agent (3),
- letting the binding agent harden, to obtain the bio-based composite.

## Description

### FIELD OF THE INVENTION

The present invention relates to a method for processing a mix of lignocellulose fibers, such as miscanthus or sorghum fibers, for the production of a bio-based composite, comprising the step of:
- harvesting lignocellulosic crops and processing the harvested lignocellulosic crops to obtain a raw mix of lignocellulose fibers. The invention further relates to products containing lignocellulose fibers, such as bio-based composites and bio-based concrete.

### BACKGROUND OF THE INVENTION

Such methods are well-known in the art. The prior art discloses many ways of obtaining the raw mix of fibers and the subsequent production of bio-based composites from these fibers.

International (PCT) patent publication WO 2010139056, for instance, relates to methods of manufacturing bio-plastic materials and articles obtained by moulding the plastic materials of the invention.

Chinese patent publication CN 104327525 discloses a biodegradable plastic comprising grass powder, such as miscanthus, as a raw material. The biodegradable plastic comprises 30-60% of the grass powder, 20-45% of PE, 3-10% of a modifying agent, 3-10% of a binder, and 3-5% of a bleaching agent. The grass powder is used as the base raw material and is co-mixed with the PE, the modifying agent, the binder and the bleaching agent to prepare the biodegradable plastic.

German patent publication DE 4336627 discloses a composite material, i.e. a matrix of thermoplastic materials and a fibrous material, e.g. reed or rush. The preferred reed type is 'miscanthus sinensis' which for optimum reinforcement has a size/diameter ratio of 10. Reed bars can be unidirectionally or bidirectionally embedded in the plastic matrix.

European patent publication EP 0830424 A1 discloses a plastic-based composite product which consists at least partially of a plastic in which a material consisting substantially of particles is homogeneously embedded, which particles have tensile strength in at least one principal direction. The particles comprise: small particles, in particular plates or fibres with a random orientation and a size of 0.2-2 mm; and large particles with a dominant orientation, for instance 80-95%, of the said principal direction of the particles in a chosen product principal direction and a size in the particle principal direction of about 2-6 mm.

European patent publication EP 2647758 A1 describes methods for the industrial production of fiber reinforced composites utilizing wastes from the intensive agriculture of musa genus, bananas, plantains, abaca etc. These methods describe ways for the extraction of the fibers from the dried pseudo-stem's lignocellulose matrix and using the lignocellulose matrix in turn to produce a reactive adhesive resin that can encapsulate the obtained fibers to produce a fiber-reinforced composite material which can be biodegraded by micro-organisms.

International (PCT) patent publication WO 2006048332 A1 is directed to an extrudable compound, an extrusion method, and an extruded product comprising a polymer, a cellulosic fiber, and at least one lubricant selected from the group consisting of esters of ethoxylated hydantoins, esters of ethoxylated sorbitol or sorbitan, or N,N'-bisalkanoylethylenediamines containing from 8 to 14 carbon atoms in each alkanyl group. Extruded products manufactured according to the invention simulate conventional wood products.

In practice, however, it appears that the quality and properties of the mix of fibers ending up in matrix of the final product are quite unpredictable, leading to the final product having unpredictable performance. Furthermore, the environment-friendliness of the final product is lower than expected due to suboptimal use of the available fiber mix: fibers may be present having physical/chemical properties that are actually detrimental to the end product, such as high absorption of moisture when low absorption of moisture is actually required. Sometimes, the end product has such a low quality that the end product is to be discarded altogether, effectively due to the low quality of the used fiber mix.

### OBJECT OF THE INVENTION

An object of the invention is therefore to provide a method for processing a mix of lignocellulose fibers for the production of a bio-based composite, wherein the quality and properties of the mix of fibers ending up in matrix of the final product are more predictable, leading to more predictable performance of the final composite product.

Another object of the invention is to prepare bio-based composites having improved compostability.

Another object is to prepare a concrete containing lignocellulose fibers having improved properties.

A further object of the invention is to provide a method for processing a mix of lignocellulose fibers for the production of a bio-based composite, wherein optimal use is made of the quantity of available fiber mix.

### DESCRIPTION OF THE INVENTION

Hereto, the method according to the invention is characterized by: a method (100) for processing a mix of lignocellulose fibers, such as miscanthus or sorghum fibers, for the production of a bio-based composite (1), comprising the steps of:
- harvesting (101) lignocellulosic crops and processing the harvested lignocellulosic crops to obtain a raw mix of lignocellulose fibers (2),
- separating (102) the raw mix of lignocellulose fibers, such as by sieving or grinding, into a first fraction (f1) comprising a mix of fibers having a fiber size of approximately < s1 and having first physical/chemical properties and a second fraction (f2) comprising a mix of fibers having a fiber size of approximately > s1 and having second physical/chemical properties being different from the first physical/chemical properties,
- mixing (201) the fibers of the first fraction (f1) or the fibers of the second fraction (f2) with a binding agent (3),
- letting the binding agent harden (202), to obtain the bio-based composite.

Applicant has found that lignocellulose fibers, in particular miscanthus fibers, display highly different physical/chemical properties based primarily on their fiber size. Therein, s1 is preferably to be determined by performing one or more (iterative) tests/experiments, preferably on the same batch/crop harvest, in view of the desired physical/chemical properties of the fiber fraction(s) f1, f2 in the bio-based composite or final product.

Preferably, the harvesting step comprises chopping of the fibers. The separation step preferably comprises (in a consecutive manner) one or more subsequent sieving and grinding steps.

Preferably, a dry lignocellulosic crop is used (i.e. comprising mainly plant dry matter/biomass), such that the raw mix of lignocellulose fibers comprises at least 80 wt%, preferably at least 90 or 91 wt% dry fibers. In practice 5-20 wt% water will remain in the raw mix of lignocellulose fibers. For instance, when miscanthus fibers are used, the raw mix of fibers can immediately be processed (while harvesting) by a chopping device, such as a maize/corn chopping device, without having to dry the raw mix of fibers prior to further processing.

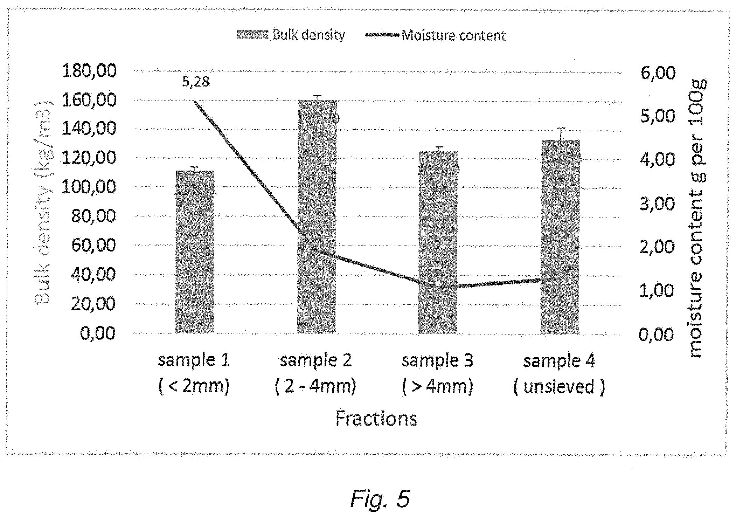

For example, during such tests Applicant has found that when s1 is chosen roughly around 2 mm, fibers having a fiber size lower than 2 mm generally display high moisture absorption capabilities, whereas fibers having a fiber size larger than roughly 2 mm show a sharp, unexpected drop in such moisture absorption capabilities - as shown by the solid line in Figure 5, which shows the results of the abovementioned tests.

Analogously, the bulk density of fibers having a fiber size of roughly 2 - 4 mm is higher than the bulk density of fibers having a fiber size lower than roughly 2 mm, a fiber size larger than roughly 4 mm or even the fiber sizes present in an unsieved sample. In this case s1 can thus be chosen again at roughly 2 mm, when the fibers are to be used in a bio-composite requiring the fibers to have a high bulk density, for instance bio-concrete.

Thus, Applicant is of the opinion that, prior to processing the fibers, it is recommendable to separate the raw fiber mix into fractions having different fiber sizes to ensure that the physical/chemical properties of the mix of fibers ending up in the matrix of the final product are as predictable as possible and therefore lead to predictable performance of the final composite product.

Furthermore, it is very well possible to use the first fiber fraction with a first type of product (say: diapers, requiring high absorption of moisture) and the second fraction with a second type of product (say: an interior component of a car, requiring low absorption of moisture) so that optimal use is made of the available fiber mix. Also, it is of course possible to mix the first fraction with the second fraction when the physical/chemical properties of the individual fractions are known and at least some prediction can be made as to the final properties of the obtained mix.

It is possible to grind fibers having a large fiber size (for example larger than 10 mm) into fibers having shorter fiber size (for example below 2 mm, between 2 and 4 mm and between 4 and 8 mm).

In the context of the present patent application 'fiber size' generally relates to 'fiber length'. Situations are, however, conceivable wherein fiber width exceeds fiber length - such as with very small fiber lengths - and therefore the use of the expression fiber size is thus deemed to be more appropriate. The fiber size is determined by sieving, preferably by sieving with an air jet sieve. The air jet sieve is a sieving machine for single sieving, i.e. for each sieving process only one sieve is used. The sieve itself is not moved during the process. The material on the sieve is moved by a rotating jet of air: A vacuum cleaner which is connected to the sieving machine generates a vacuum inside the sieving chamber and sucks in fresh air through a rotating slit nozzle. When passing the narrow slit of the nozzle the air stream is accelerated and blown against the sieve mesh, dispersing the particles. Above the mesh, the air jet is distributed over the complete sieve surface and is sucked in with low speed through the sieve mesh. Thus, the finer particles are transported through the mesh openings into the vacuum cleaner or, optionally, into a cyclone.

An embodiment relates to an aforementioned method, wherein s1 = 1.0 - 3.0 mm, preferably 1.5 - 2.5 mm, such as for example 2 mm. From tests performed by the Applicant (such as shown in Figure 5), it appears that moisture absorption is generally optimal for fibers having a fiber size smaller than the above stated fiber sizes. Preferably, when the bio-based composite is processed into a granulate, s2 = 1.0 - 3.0 mm, preferably 1.5 - 2.5 mm, such as for example 2 mm, or, respectively, when the bio-based composite is a bio-based concrete, s2 = 2-8 mm, or s2 = 3.0 - 5.0 mm, preferably 3.5 - 4.5 mm, such as for example 4 mm. An embodiment relates to an aforementioned method, comprising the step of:
- separating the second fraction, such as by sieving or grinding, into a third fraction comprising a mix of fibers having a fiber size of approximately > s1 and approximately < s2 and a fourth fraction comprising a mix of fibers having a fiber size of approximately > s2. Thus, a further distinction can be made with respect to fiber size, especially when s1 is chosen to be rather small and the second fraction comprises fibers having widely differing fiber sizes and fibers that are too large for any useful purpose. The third fraction therein can advantageously serve as an "intermediate" fraction - often exhibiting an optimal level of a certain desired physical/chemical property. Of course, the first fraction can also be separated into further fractions, if desired, in particular when s1 is chosen to be rather large.

The inventors have found that use of different sizes of fibers (preferably from Miscanthus) in concrete mixtures gives biobased concrete having different properties. The invention therefore also relates to a biobased concrete mixture having between 5 and 13 vol% of fibers, wherein at least 50 wt% of the fibers have a fiber size between 2 and 8 mm. Preferably at least 70 wt% of the fibers have a fiber size between 2 and 8 mm. The 5 to 13 vol% of fibers relate to 1 to 2.6 wt% of fibers, relative to the concrete mixture (before curing). The biobased concrete mixture will harden to a biobased concrete.

Preferably the biobased concrete mixture also contains between 0.01 to 1 wt% of a superplasticizer (relative to the total weight of the concrete mixture). Examples of superplasticizers are polycarboxylate ether plasticizers, which are graft copolymers of methoxy polyethyleneglycol copolymer (side chain) with methacrylic acid copolymers.

This biobased concrete mixture has the advantage that the concrete mixture is self-consolidating and after curing/hardening yields a strong concrete. The concrete mixture flows easily and vibrating of the fresh concrete mixture is not needed.

This concrete mixture (preferably containing miscanthus) can be made in a process comprising the steps of
a) weighing the materials
b) dry mixing of the powders (cement and fillers other than sand)
c) adding sands and dry mixing of sands with powders
d) adding 75% of required water and homogeneously mixing the content
e) optionally letting the mix rest for about 1 minute
f) addition of a superplasticizer + remaining 25% water and continue the slow mixing
g) adding dry miscanthus fibres and continue the slow mixing
h) add additional water (2.5 g water per 1 gr fiber) and continue slow mixing
i) optionally increasing the mixing speed to separate any clumping fibres to obtain the miscanthus containing concrete mixture.

The invention also relates to a 3D-printable concrete mixture which has different flow properties compared to the above defined concrete mixture. The 3D printable concrete mixture has the advantage that flow is very limited before hardening of the concrete mixture, so that subsequent layers of concrete mixture can be printed on top of each other.

The 3D printable concrete mixture contains between 7 and 20 wt% of fibers having a particle size less than 1.5 mm, preferably miscanthus fibers. Preferably the 3D printable concrete mixture contains between 10 and 15 wt% of miscanthus fibers, more preferably 12-15 wt%, most preferably 14 wt%, having a fiber size less than 1.5 mm. Such amounts of specific fibers reduces the slump flow with at least a factor 2-3 relatively to concrete mixture having no specific fibers.

The 3D printable concrete mixture further preferably is based on a MgO/aqueous MgCl2 mortar system. The to-be-used magnesia cement is also called Sorell cement or Magnesia Oxychloride cement (MOC), which is produced by mixing MgO with a MgCl2 solution. Reaction takes place that forms magnesium chloride hydroxide hydrates. Examples of Mg-complexes that can be formed are for example 5Mg(OH)2-1MgCl2-8H2O 5-1-8 (normally forms first, metastable) and 3Mg(OH)2-1MgCl2-8H2O 3-1-8 (stable phase, normally formed from 5-1-8).

Advantages of using magnesia cement include: a white, marble-like appearance, high early strength/good elastic properties (due to good connection between matrix and fiber), able to incorporate high amounts of filler/organic material, does not require humid curing, does not shrink/expand and can be produced with relatively low CO2 output.

By means of example, the recipe for a 3D printable biobased concrete mixture may comprise the following ingredients:
- Miscanthus (milled to 1,5mm) 14, 19 and 24 wt% of dry mass
- 28, 35 and 40 vol% of dry volume
- MgCl2×6H2O mixed with tap water (ratio 0,7 by weight)
- MgO mixed with MgCl2×6H2O (ratio 1,25 g/ml) (High solid/liquid ratio to account for water adsorption of Miscanthus)

Compressive strength tests yield the following results for different wt% of miscanthus fibers:

| Mix | Age (h) | Strength (Mpa) | Density (g/cm₃) |
|---|---|---|---|
| 14wt% | 1 | 0.1 | |
| | 5 | 0.38 | |
| | 7 | 1.03 | |
| | 24 | 55 | 1.51 |
| 19wt% | 1 | 0.05 | |
| | 5 | 0.12 | |
| | 7 | 0.72 | |
| | 24 | 50 | 1.57 |
| 24wt% | 24 | 26 | 1.34 |

A disadvantage of magnesia cement is that it is not water resistant. However, if the 3D printing focuses on indoor objects the water resistance is not an issue. For additional protection the concrete objects can also be coated after 3D printing.

Another aspect of the invention concerns a method for producing a bio-based composite by using the first fraction, the second fraction, the third fraction and/or the fourth fraction according to an aforementioned method, further comprising the steps of:
- mixing the fibers of the first fraction, the second fraction, the third fraction and/or the fourth fraction with a binding agent, wherein the mixing ratio is determined based on the desired properties of the bio-based composite to be produced,
- letting the binding agent cure, to obtain the bio-based composite.

The abovementioned bio-based composite can e.g. be a bio-plastic, a bio-concrete or any other type of bio-based composite.

An embodiment relates to an aforementioned method, comprising the further step of:
- processing the bio-based composite into a granulate.

Applicant has found that processing the bio-based composite into a granulate has many advantages, such as improved transportability and dosability.

Preferably, the aforementioned method comprises the further steps of:
- compressing the fibers of the first fraction, the second fraction, the third fraction and/or the fourth fraction into pellets under the addition of an adhesive agent, such as maltodextrin,
- mixing the pellets containing the fibers of the first fraction, the second fraction, the third fraction and/or the fourth fraction with the binding agent and letting the binding agent solidify to obtain the bio-based composite, and
- processing the bio-based composite into the granulate.

Preferably, the binding agent is a plastic and the mixing of the pellets with the binding agent is performed with a plastics extruder. More preferably, s1 is chosen at around 0.5 mm and a first fraction having fibers of a size smaller than 0.5 mm is then used to create the pellets. Such pellets are easy to create by compression, are easily mixable with the binding agent and are easy to process into the granulate.

The plastic is preferably a biobased thermoplastic material, such as for example a starch based thermoplastic material, blends of starch with alcohols, like for example glycerol, polyvinylalcohol, polylactic acid, aliphatic polyesters, polyvinylacetate, blends of flour blends with for example polymers based for example on one or more ethylenically unsaturated monomers from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides and the like (see also WO2010133560).

The amount of fibers having a fiber size smaller than 0.5 mm ranges between 0.1 and 10 wt% relative to the total of the biobased composite.

An embodiment relates to an aforementioned method, comprising the further step of:
- compressing the granulate into a foil, for instance by guiding the granulate in between counter-rotating rollers.

An embodiment relates to an aforementioned method, comprising the further steps of:
- processing the aforementioned bio-based composite, the aforementioned granulate or the aforementioned foil into a product, such as a product intended for absorption of moisture, such as a packaging for a food product or a diaper.

Other (consumer) products are of course also conceivable, such as vases for flowers, lampshades, cat litter, et cetera.

Applicant has also found that producing a foil having a plurality of layers, such as 1, 2, 3, 4, 5, but preferably 3 layers, could further optimize the mechanical and/or chemical properties of the final product. Preferably, the layers are then applied in an alternating pattern, such as A-B-A (when 3 layers are used), with the outer layers having mechanical or chemical properties A and the middle layer having mechanical or chemical properties B. For instance, the middle layer (in particular when an odd number of layers is used) may be reinforced with other types of fibers, such as jute or sackcloth.

In a preferred embodiment a foil can be prepared having three layers (ABA), wherein the outer layers A are made from a biocompatible material (for example PLA) and the inner (B) layer comprises between 2 and 40 wt% of fibers (preferably miscanthus) having a size less than 0.5 mm. Such foil can be used for packaging food products and can contain high amounts of fiber in the (B) layer, having improved tearing properties.

Preferably, in particular when a packaging product is produced, a thermoforming or thermomolding process is used to produce the foil into the product. More preferably, a thermoforming process is used wherein the process temperature is around 110 - 130 oC, preferably around 120 oC. Applicant has advantageously found that when the foil mainly (i.e. > 50%, preferably > 70%, more preferably > 80% or even > 90%) comprises fibers with a fiber size of about 0.3 - 0.5 mm (i.e. the first fraction is further separated into a first further separated fraction), preferably about 0.3 - 0.4 mm, more preferably about 0.325 - 0.375 mm, such as around 0.35 mm, the process (oven) temperature can be lowered (i.e. versus the usual temperature of around 180 oC). This leads to substantial energy savings during the thermoforming process. Applicant has found that 20 - 30 % energy savings are realistic, improving and emphasizing the durable character of the products.

Applicant has also found from practice that a main/first fraction (i.e. a first further separated fraction) comprising fibers with the mentioned fiber size of about 0.3 - 0.5 mm, preferably about 0.3 - 0.4 mm, more preferably about 0.325 - 0.375 mm, such as around 0.35 mm, reduces shearing during the extrusion process of the granulate and the foil. At the same time this fiber size surprisingly leads to very good moisture absorption properties and mechanical properties of the final product.

Applicant therein has found that the fibers often 'burn' when high extrusion temperatures are used, leading to foul or 'burnt' odors. Applicant has found that when an extrusion temperature of about 160 - 170 oC, such as around 165 oC, is used, the occurrence of foul odors is reduced. Applicant has found during tests that with the abovementioned first further separated fraction fiber sizes foul odors are even almost non-existent, possibly due to the lower friction in the extruder.

An embodiment relates to an aforementioned method, wherein the first fraction constitutes at least 70%, more preferably at least 80%, even more preferably at least 90%, most preferably around 100%, of the fiber mix to be mixed with the binding agent, such that the physical/chemical properties of the first fraction prevail in the end product. As the skilled person will understand, the percentages mentioned throughout this patent application concern % weight, unless indicated otherwise.

An embodiment relates to an aforementioned method, wherein the third fraction constitutes at least 70%, more preferably at least 80%, even more preferably at least 90%, most preferably around 100%, of the fiber mix to be mixed with the mortar, such that the properties of the third fraction, or "intermediate fraction", are dominant in the end product.

An embodiment relates to an aforementioned method, further comprising the step of:
- prior to letting the mortar cure, printing the fluid mortar/fiber mixture in a desired shape using a 3D-printer. Applicant has found that the above fluid mixture can be conveniently used with a 3D-printer to print shapes (such as a bench or a curb) or objects for use with the construction of a building or the like, in particular when a fiber size of roughly 0.1 and 1.5 mm is used, guaranteeing good flowability for printing, low moisture absorption, good strength of the printed concrete mixture shape and good insulative properties.

An embodiment relates to an aforementioned method, wherein, when the bio-based composite is processed into a granulate or (consumer) product, s1 is about 0.4 mm, more preferably about 0.375 mm, such as around 0.35 mm.

Preferably, when the bio-based composite is processed into a granulate or product, the first fraction is further separated to obtain a first further separated fraction comprising fibers having a length of 0.3 - 0.5 mm, preferably about 0.3 - 0.4 mm, more preferably about 0.325 - 0.375 mm, such as around 0.35 mm. Applicant has found this greatly reduces friction during the extrusion process of the foil. At the same time this fiber size surprisingly leads to very good moisture absorption properties and mechanical properties of the final product.

### BRIEF DESCRIPTION OF THE DRAWINGS

The present invention will be explained hereafter with reference to exemplary embodiments of a method according to the invention and with reference to the drawings. Therein:
Figure 1 schematically shows a method for processing a mix of lignocellulose fibers for the production of a bio-based composite;
Figure 2 schematically shows a method for processing a mix of lignocellulose fibers for the production of a bio-based composite, wherein the bio-based composite is processed into a granulate;

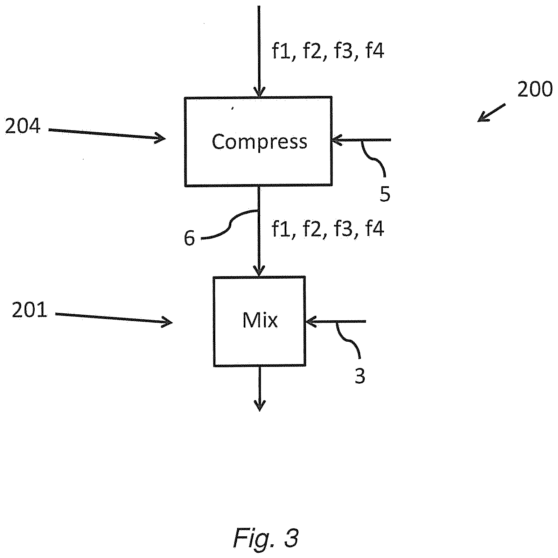

Figure 3 schematically shows a method for compressing the mix of fibers into pellets and mixing the pellets with the binding agent;
Figure 4 schematically shows a method for processing the granulate into a foil; and
Figure 5 shows a graph depicting bulk density and moisture content for several fiber fraction samples.

### DETAILED DESCRIPTION

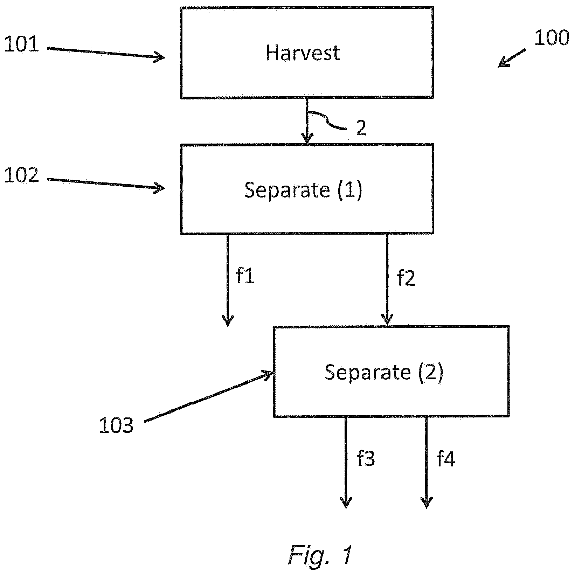

Figure 1 schematically shows a method 100 for processing a mix of lignocellulose fibers, such as miscanthus or sorghum fibers, for the production of a bio-based composite 1. The method 100 comprises the steps of:
- harvesting 101 lignocellulosic crops and processing the harvested lignocellulosic crops to obtain a raw mix of lignocellulose fibers 2. According to the invention, the method 11 is characterized by
- separating 102 the raw mix of lignocellulose fibers 2, such as by sieving or grinding, into a first fraction f1 comprising a mix of fibers having a fiber size of approximately < s1 and having first physical/chemical properties and a second fraction f2 comprising a mix of fibers having a fiber size of approximately > s1 and having second physical/chemical properties being different from the first physical/chemical properties. Preferably, s1 = 1.0 - 3.0 mm, more preferably 1.5 - 2.5 mm, such as 2 mm. Preferably, the harvesting step comprises chopping of the fibers. The separation step preferably comprises (in a consecutive manner) one or more subsequent sieving and grinding steps.

To characterize for instance the moisture content (as physical property) of the first fraction f1 and the second fraction f2, the individual fractions f1, f2 (i.e. samples thereof) can be heated, such as overnight, to a temperature of 90 - 110 oC, such as around 105 oC, to determine their respective moisture content. Thus, by experimenting with different values for s1, an optimal value for s1 can be determined in order to have a first fraction f1 or second fraction f2 with a certain desired moisture content.

The density of the respective fraction f1, f2 can be determined using one of the abovementioned (dried) samples, and a He-Pycnometer. Thus, analogously, by experimenting with different values for s1, an optimal value for s1 can be determined in order to have a first fraction f1 or second fraction f2 with a certain desired density.

Water absorption, for instance, can be determined using a hydrostatic balance for each individual size fraction f1, f2 as an indication of the amount of water the bio-based composite 1 or the final product comprising such fractions f1, f2 can absorb. When the bio-based composite 1 is a bio-based concrete mixture, comprising a cement or mortar, the influence of the fibers of the first and second fractions f1, f2 on cement hydration, isothermal calorimetry can be used (with relatively small samples of for instance 10 ml). The fractions f1, f2 can for instance by ground in a mill, such as a ball mill, and then mixed with cement. The heat generated during hydration can be measured and compared to 'neat' cement paste. The lignocellulose fibers are boiled in water to leech organics from the fibers. The water is then mixed with cement and the influence on hydration measured. After initial assessment with isothermal calorimetry, larger volume/lignocellulose mixes can be made in insulated moulds and the temperature measured during hydration. The lignocellulose will be mixed 'as-is', giving less accurate but more realistic information about the influence of lignocellulose on cement hydration.

Based on the above measurements/characterizations, in case of a bio-based concrete as the bio-based composite 1 to be obtained, multiple recipes with varying lignocellulose/cement/water ratios can be made and tested for physical/chemical properties (such as mechanical properties, densities, rheological properties).

Ways to pre-treat the lignocellulose fibers, such as by soaking in water or salt solutions, can be tested and applied in cement.

Preferably, the above steps are to be repeated with lignocellulose harvested in a different year, season, location, soil type, et cetera to obtain an indication of the 'natural' variation of physical/chemical properties.

As shown in figure 1, the second fraction f2 can be separated 103 further, such as by sieving or grinding, into a third fraction f3 comprising a mix of fibers having a fiber size of approximately > s1 and approximately < s2 and a fourth fraction f4 comprising a mix of fibers having a fiber size of approximately > s2. Preferably, s2 = 3.0 - 5.0 mm, more preferably 3.5 - 4.5 mm, such as 4 mm.

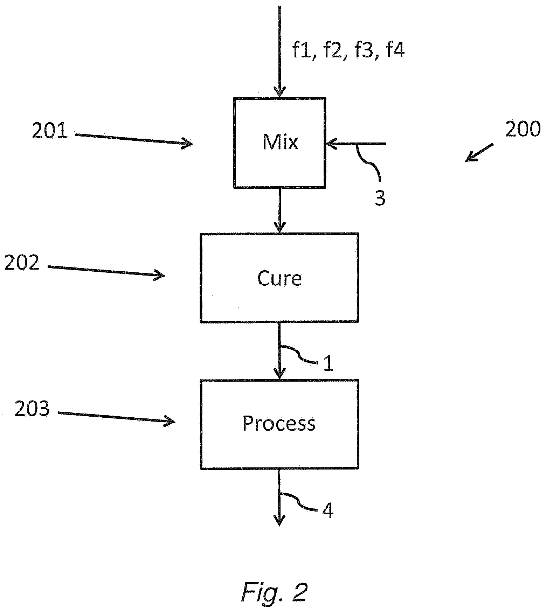

Figure 2 schematically shows a method 200 for producing a bio-based composite 1 by using the first fraction f1, the second fraction f2, the third fraction f3 and/or the fourth fraction f4, further comprising the steps of:
- mixing 201 the fibers of the first fraction f1, the second fraction f2, the third fraction f3 and/or the fourth fraction f4 with a binding agent 3, wherein the mixing ratio is determined based on the desired properties of the bio-based composite 1 to be produced,
- letting the binding agent 3 cure 202, to obtain the bio-based composite 1 A further step of the method 200 could comprise the further step of:
- processing 203 the bio-based composite into a granulate 4.

The method 200 could comprise the further steps of:
- compressing 204 the fibers of the first fraction f1, the second fraction f2, the third fraction f3 and/or the fourth fraction f4 into pellets 6 under the addition of an adhesive agent 5, such as maltodextrin,
- mixing 201 the pellets 6 containing the fibers of the first fraction f1, the second fraction f2, the third fraction f3 and/or the fourth fraction f4 with the binding agent 3 and letting the binding agent 3 cure to obtain the bio-based composite 1, and
- processing 203 the bio-based composite 1 into the granulate 4.

As mentioned before, preferably, the binding agent 3 is a plastic and the mixing of the pellets 6 with the binding agent 3 is performed with a plastics extruder. More preferably, s1 is chosen at around 0.5 mm and a first fraction f1 having fibers of a size smaller than 0.5 mm is then used to create the pellets 6. Such pellets 6 are easy to create by compression, are easily mixable with the binding agent 3 and are easy to process into the granulate 4.

Maltodextrin, by the way, advantageously becomes warm, e.g. as a result of friction in the press, and consequently sticky, when compressed (i.e. during compression of the pellets 6).

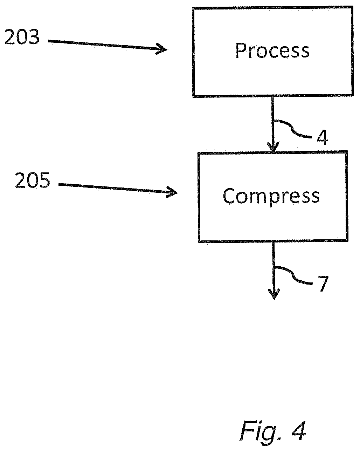

As shown in figure 4, the method 200 could comprise the further step of:
- compressing 204 the granulate 4 into a foil 7.

Finally, the method 200, comprises the further steps of:
- processing the bio-based composite 1, the granulate 4 or the foil 7 into a product, such as a product intended for absorption of moisture, such as a packaging for a food product or a diaper. Other (consumer) products are of course also conceivable, such as vases for flowers, lampshades, cat litter, (packaging) trays, et cetera. Preferably, when a diaper is produced, the bio-based composite 1 is incorporated in a pad or similar holder/container, the pad therein acting as a desiccant (much like a silica gel). The diaper pad is thus not produced by thermoforming, extruding, et cetera, unlike several of the other (consumer) products, such as crockery, trays, vases, et cetera. Preferably, the pad or similar holder/container comprises one or more layers (acting as a membrane) comprising miscanthus fibers.

Applicant has also found that producing a foil 7 having a plurality of layers, such as 1, 2, 3, 4, 5, but preferably 3 layers, could further optimize the mechanical and/or chemical properties of the final product. Preferably, the layers are then applied in an alternating pattern, such as A-B-A (when 3 layers are used), with the outer layers having mechanical or chemical properties A and the middle layer having mechanical or chemical properties B. For instance, the middle layer (in particular when an odd number of layers is used) may be reinforced with other types of fibers, such as jute or sackcloth. Preferably the layer A does not contain miscanthus and is prepared from a biocompatible resin (like for example PLA) and the layer B contains miscanthus fibers.

Preferably, in particular when a diaper or a packaging product is produced, a thermoforming or thermomolding process is used to produce the foil 7 into the product. More preferably, a thermoforming process is used wherein the process temperature is around 110 - 130 oC, preferably around 120 oC. Applicant has advantageously found that when the foil 7 mainly (i.e. > 50%, preferably > 70%, more preferably > 80% or even > 90%) comprises fibers with a fiber size of about 0.3 - 0.5 mm (wherein s1 = about 0.3 mm and s2 = about 0.5 mm), preferably about 0.3 - 0.4 mm, more preferably about 0.325 - 0.375 mm, such as around 0.35 mm, the process (oven) temperature can be lowered (i.e. versus the usual temperature of around 180 oC). This leads to substantial energy savings during the thermoforming process. Applicant has found that 20 - 30 % energy savings are realistic, improving and emphasizing the durable character of the products.

Applicant has also found from practice that a first further separated fraction comprising fibers with the mentioned fiber size of about 0.3 - 0.5 mm, preferably about 0.3 - 0.4 mm, more preferably about 0.325 - 0.375 mm, such as around 0.35 mm, reduces friction during the extrusion process of the foil 7. At the same time this fiber size surprisingly leads to very good moisture absorption properties and mechanical properties of the final (consumer) product.

In an embodiment, the first fraction f1 could constitute at least 70%, more preferably at least 80%, even more preferably at least 90%, most preferably around 100%, of the fiber mix 2 to be mixed with the binding agent 3.

When cutting the edges of the foil 7, before rolling the foil 7 up into or onto a roll, preferably round knives (i.e. "pizza knives") are used to obtain a neat edge (instead of e.g. Stanley knives).

Preferably, the fibers are mixed with a natural polymer (instead of relatively unnatural polymers such as PE and PP) to improve compostability of the product, leading to a lower burden on the environment.

The bio-based composite 1 could be a bio-based concrete mixture and the binding agent 3 could be a mortar.

Alternatively, the third fraction f3 could constitute at least 70%, more preferably at least 80%, even more preferably at least 90%, most preferably around 100%, of the fiber mix 2 to be mixed with the mortar.

The method could furthermore comprise the step of:
- prior to letting the mortar cure, printing the fluid mortar/fiber mixture in a desired shape using a 3D-printer.

It should be clear that the description above is intended to illustrate the operation of preferred embodiments of the invention, and not to reduce the scope of protection of the invention. Starting from the above description, many embodiments will be conceivable to the skilled person within the inventive concept and scope of protection of the present invention.

### LIST OF REFERENCE NUMERALS

1. Bio-based composite
2. Raw mix of lignocellulose (miscanthus) fibers
3. Binding agent
4. Granulate
5. Adhesive agent
6. Pellets
7. Foil
100. Method for processing a mix of lignocellulose fibers for the production of a bio-based
composite.
101. Harvesting step
102. Separating step (1)
103. Separating step (2)
200. Method for producing a bio-based composite
201. Mixing step
202. Curing step
203. Processing into granulate step
204. Compression into pellets step
205. Compression into foil step

### Example 1

A miscanthus based mortar is prepared with the following process:
- weigh the materials
- 1st minute : dry mixing of the powders
- 2nd minute: add sands; dry mixing of sands with powders
- 3rd minute: add 75% of required water and check if everything is mixing thoroughly
- 4th minute: let the mix rest for 1 minute
- 5th & 6th minute: add the superplasticizer + remaining 25% water and continue the
   slow mixing
- 7th minute : add the dry fibres and continue the slow mixing
- 8th & 9th minute: add the additional (2.5 g water per 1 gr fibre) and continue slow
   mixing (level 1)
- 10th & 11th minute: increase the mixing speed to separate any clumping fibres.

### Particle size distribution for mortar production

| **Fraction sizes** | **Average (g)** | **Standard Deviation (g)** | **Percentage (%)** | **Cumulative percentage (%)** |
|---|---|---|---|---|
| **Unsieved** | **91.83** | **0.05** | **-** | |
| **<2mm** | 1.53 | 0.45 | 23.15 | 23 |
| **2-4 mm** | 4.90 | 0.75 | 55.10 | 78 |
| **4** - **5.6 mm** | 9.93 | 2.00 | 14.84 | 93 |
| **5.6 - 8 mm** | 54.07 | 1.45 | 5.48 | 99 |
| **>8mm** | 24.20 | 3.05 | 1.40 | 100 |

### Example 2

A 3D printable concrete mixture is produced having different levels of fibers having a size below 1.5 mm

| **Mixtures** | **Dry fib res specimens** | | **Pre-satu spe rated fibres cimens** | |
|---|---|---|---|---|
| | **Fresh density (kg/m³)** | **Average slumpflow (cm)** | **Fresh density (kg/m³)** | **Average slumpflow (cm)** |
| **Reference 0%** | 2237.1±50 | 30.25±0.5 | 2237.1±50 | 30.25±0.5 |
| **Miscan thus 2%** | 2102.2±50 | 28.25±1 | 2084.4±50 | 28.75±1 |
| **Miscan thus 3%** | 2100.4±50 | 28±0.5 | 2132.1±50 | 27.25±1 |
| **Miscant thus 4%** | 2002.8±50 | 25.75±1 | 2010.8±50 | 26.5±1 |
| **Miscan thus 5%** | 1864.3±50 | 24.75±1 | 1891.2±50 | 24±1 |
| **Miscan thus 9%** | 1804.4±50 | 12.5±0.5 | 1770.7±50 | 12±0.5 |

The 3D printable concrete mixture is based on an MgO/aqueous MgCl2 mortar system. Magnesia cement, also called Sorell cement or Magnesia Oxychloride cement (MOC), is used, which is produced by mixing MgO with MgCl2 solution. A reaction takes place that forms magnesium chloride hydroxide hydrates:
- 5Mg(OH)2-1MgCl2-8H2O 5-1-8 (normally forms first, metastable)
- 3Mg(OH)2-1MgCl2-8H2O 3-1-8 (stable phase, normally formed from 5-1-8)

The recipe for the 3D printable biobased concrete mixture comprises the following ingredients:
- Miscanthus (milled to 1.5mm) 14, 19 and 24 wt% of dry mass
- 28, 35 and 40 vol% of dry volume
- MgCl2×6H2O mixed with tap water (ratio 0,7 by weight)
- MgO mixed with MgCl2×6H2O (ratio 1,25 g/ml)
- High solid/liquid ratio to account for water adsorption of Miscanthus

The figure below shows the hydration reaction of magnesia cement incorporating different wt% of Miscanthus. Heat flow is normalized to mass of magnesium oxide:

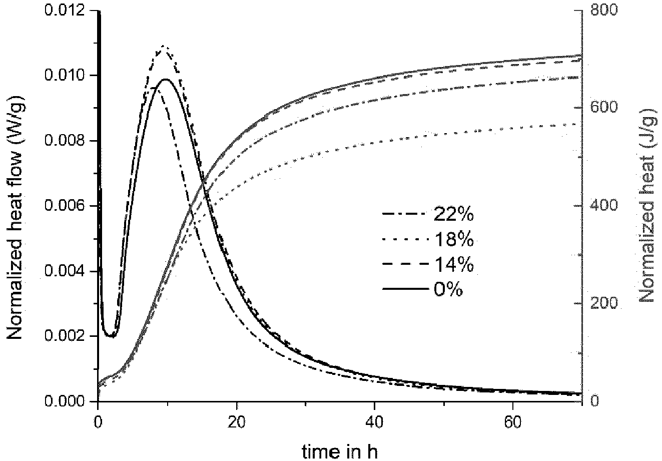

The mixes are prepared by mixing the dry ingredients first by hand, adding the solution and then mixing everything by hand again for about 30s until a homogenous mass is produced.

Compressive strength tests results for different wt% of miscanthus fibers:

| Mix | Age (h) | Strength (Mpa) | Density (g/cm₃) |
|---|---|---|---|
| 14wt% | 1 | 0.1 | |
| | 5 | 0.38 | |
| | 7 | 1.03 | |
| | 24 | 55 | 1.51 |
| 19wt% | 1 | 0.05 | |
| | 5 | 0.12 | |
| | 7 | 0.72 | |
| | 24 | 50 | 1.57 |
| 24wt% | 24 | 26 | 1.34 |

Spread flow tests according to standard C1437 with 10 cm cone results:

| Mix | MgO (g) | MgCl2 solution (ml) | Miscanthus (g) | Miscanthus (wt% of solids) | Flow (cm) |
|---|---|---|---|---|---|
| | 250 | 200 | 40 | 14 | 13.2 |
| | 250 | 200 | 55 | 18 | no flow |
| | 250 | 200 | 70 | 22 | no flow |

All 3 mixes show very low or now flow. This is a desired property for 3D printing, because it allows printed lines to keep their shape until they are sufficiently hardened. The hydration visible with isothermal calorimetry is not significantly retarded by the addition of Miscanthus and the reaction maximum is reached after 9h.

The early compressive strength of the prisms is low. After 1h the prisms can be handled, but are still soft. But due to their low flowability it is still possible to print with the material. After 24h the strength is very high with 50-55MPa for mix 1 and 2. Even mix 3 with 22wt% Miscanthus has a strength of 26 MPa. This is sufficient for 3D printed objects, but its workability is entirely unsuitable, because the mix is too dry and likely cannot be pumped.

SEM pictures show excellent adhesion between the dense magnesia cement matrix and the Miscanthus fiber. This is the reason magnesia cement can incorporate high amounts of natural fibers without loss of strength.

Overall mix 2 seems to be the most suitable one for printing, but the advantage of magnesia cement is that the mix can be adjusted over a wide range to get optimal workability without significant loss of strength or delay in hardening.

### Example 3

### Alternative magnesium oxide

In order to improve the early compressive strength of the magnesia cement for 3D printing, highly reactive magnesium oxide was tested. A mix consisting of pure magnesia cement without Miscanthus is used for this purpose. The composition of these mixes is as follows: 250g MgO and 150ml MgCl2 solution with the same concentration as described previously. However the MgO was so reactive that an extreme heat development was observed to the point that the material became too hot to touch and cracks appeared. For this reason a new approach was decided. The low reactivity MgO used in the previous mixes was only partially replaced (10 and 20 wt%) with the highly reactive MgO and the influence on spread flow and setting time measured.

From the results below it can be seen that the partial replacement with highly reactive MgO decreases the setting begin by up to 40% and reduces the heat produced during setting and hydration. This makes the material suitable for 3D printing in combination with the low spread flow of the material.

Spread flow and setting begin of magnesia cement produced with low reactivity MgO and mixes of low and high reactivity MgO:

| MgO | | Flow | Setting begin |
|---|---|---|---|
| High reactivity | Low reactivity | | |
| (wt%) | (wt%) | (cm) | (h) |
| 0% | 100% | 12.5 | 1,5 |
| 1 0% | 90% | 15 | 1,2 |
| 20% | 80% | 13 | 0.9 |

It is thus possible to produce magnesia cement/ Miscanthus mixes with no or very low spread flow and a fast setting begin that are suitable for 3D printing. The addition of 18 wt% Miscanthus is easily possible but should be adjusted to get the optimum workability for 3D printing. This is easily possible without influencing the hydration behavior or negatively influencing strength.

For the magnesia cement itself a combination of small amounts of highly reactive with less reactive magnesium oxide is the most promising, because they show the fastest setting begin. A high heat development might lead to problems such as cracking, but can be counteracted in several ways:
- The addition of Miscanthus will effectively dilute the system and lower the overall temperature.
- Inert filler material in the form of limestone powder or similar material can be added to the mix, replacing part of the MgO. This would dilute the system further without negatively influencing workability or setting time.
- The concentration of the MgCl2 used in the magnesia cement production can be lowered to slow down the reaction. However, this might have negative influence on the setting speed and the final strength of the printed material.

## Claims

1. Method for processing a mix of miscanthus fibers for the production of a bio-plastic, comprising the steps of:
- harvesting miscanthus crops and processing the harvested miscanthus crops to obtain a raw mix of miscanthus fibers,
- separating the raw mix of miscanthus fibers, into a first fraction comprising a mix of fibers having a fiber size of approximately < s1 and having first physical/chemical properties and a second fraction comprising a mix of fibers having a fiber size of approximately > s1 and having second physical/chemical properties being different from the first physical/chemical properties,
- compressing the fibers of the first fraction into pellets under the addition of an adhesive agent, such as maltodextrin,
- mixing the pellets containing the fibers of the first fraction with the binding agent and letting the binding agent solidify to obtain the bio-plastic, and
- processing the bio-plastic into a granulate,
wherein s1 is about 0.5 mm, preferably about 0.4 mm, more preferably about 0.375 mm, most preferably about 0.35 mm.

2. Method according to claim 1, wherein the binding agent is a plastic and the mixing of the pellets with the binding agent is performed with a plastics extruder.

3. Method according to claim 1 or 2, wherein the first fraction is further separated to obtain a first further separated fraction comprising fibers having a length of 0.3 - 0.5 mm, preferably about 0.3 - 0.4 mm, more preferably about 0.325 - 0.375 mm, most preferably around 0.35 mm.

4. Method according to any one of claims 2 - 3, wherein the plastic is a biobased thermoplastic material.

5. Method according to claim 4, wherein the biobased thermoplastic material is chosen from the group consisting of
i) a starch based thermoplastic material,
ii) blends of starch with alcohols, preferably glycerol or polyvinylalcohol,
ii) polylactic acid,
iii) aliphatic polyesters,
iv) polyvinylacetate,
v) blends of flour,
vi) blends with polymers based for example on one or more ethylenically unsaturated monomers from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides.

6. Method according to any one of the preceding claims, wherein the amount of fibers having a fiber size smaller than 0.5 mm ranges between 0.1 and 10 wt% relative to the total of the bio-plastic.

7. Method according to any one of the preceding claims, wherein the miscanthus crop is a dry crop and the raw mix of miscanthus fibers comprises at least 80 wt%, preferably at least 90 or 91 wt% dry fibers and between 5-20 wt% water.

8. Method according to any one of the preceding claims, comprising the further step of:
compressing the granulate into a foil.

9. Method according to claim 8, wherein the foil comprises 3 layers in an A-B-A pattern, with the outer layers having mechanical or chemical properties A and the middle layer having mechanical or chemical properties B.

10. Method according to claim 9, wherein the outer layers A are made from a biocompatible material, preferably PLA, and the inner B layer comprises between 2 and 40 wt% of miscanthus fibers having a size less than 0.5 mm.

11. Method according to any one of the preceding claims, wherein the method comprises the further step of:
- processing the bio-plastic, the granulate or the foil into a product, such as a product intended for absorption of moisture, such as a packaging for a food product or a diaper.

12. Method according to claim 11, wherein a packaging product is produced, and a thermoforming process is used wherein the process temperature is around 110 - 130 °C, preferably around 120 °C.

13. Granulate obtained by the method according to any one of claims 1 - 7.

14. Product, such as a product intended for absorption of moisture, such as a packaging for a food product or a diaper, obtained by the method according to any one of claims 8 - 12.
